# EUROPEAN PATENT SPECIFICATION

(11) **EP 0 537 689 B1**
(45) Date of publication and mention of the grant of the patent: **05.01.2000**
(21) Application number: 92117482.7
(22) Date of filing: 13.10.1992
(51) Int. Cl.: H04L 12/40, H04L 12/12, B60R 16/02

(54) **Data communication method for motorcar**
Datenübertragungsverfahren für Kraftfahrzeuge
Méthode de communication de données pour automobile

(30) Priority: 14.10.1991 JP 29503091
(43) Date of publication of application: 21.04.1993
(73) Proprietor: SUMITOMO WIRING SYSTEMS, LTD., Yokkaichi City Mie Pref. (JP); SUMITOMO ELECTRIC INDUSTRIES, LIMITED, Osaka 541 (JP)
(72) Inventor: Kobayashi, Nobuyuki, c/o Sumitomo Wiring Systems, Yokkaichi City, Mie Pref. (JP); Kominami, Yukio, c/o Sumitomo Wiring Systems, Ltd., Yokkaichi City, Mie Pref. (JP); Kawamura, Seiji, c/o Osaka Works of Sumitomo, Konohana-ku, Osaka (JP)
(74) Representative: VOSSIUS & PARTNER

(56) References cited:
- EP-A- 0 327 456
- EP-A- 0 354 572
- GB-A- 2 229 298

## Description

The present invention generally relates to a data communication method for a motorcar of effecting data transmitting, receiving operations through common buses among nodes provided in the respective portions of motorcars.

Generally a bus type, a ring type or the like are provided as a shape of a LAN (Local Area Network). A network can be constructed only with the connection among the communication nodes by optical fibers, optical transceivers in a so-called LAN by optical communication. As special components are not necessary in addition, a ring type is main with connection being effected in a ring shape among the communication nodes in the optical communication LAN.

When the LAN of such a ring type of optical communication has been applied to motorcars, measures of doubling the optical fibers are necessary against troubles of the optical fibers and the communication units as data transmission passage. Therefore, many optical transceivers are required and also, circuits for controlling the folding back at the troubles are required, with inconveniences of higher prices.

In recent years, optical branch couplers are adapted to be supplied for lower prices. The optical branch couplers distribute equivalently with respect to a plurality of optical fibers the optical signals transmitted through optical fibers. The distributed control can be effected by the use of the optical branch coupler. Thus, the transmission passage is not necessary to be made double as in the above described ring type. The trouble control circuit and so on are not necessary to be provided. Therefore, highly reliable bus type of LAN which is not affected upon communication, if one node goes wrong, can be applied for motorcar use.

A system of coupling in direct current between a light receiving element and an amplifying transistor, and a system of coupling in alternating current exist in a case of the optical communication. It is difficult to obtain in a wide temperature range stable bias voltage characteristics as the base bias voltage of the amplifying transistor is large dispersed for each element in the case of the direct current coupling. Especially temperature influences are extremely large in the motorcar mounting use. Reception sensitivity which is determined by a worst value in the dispersion of the bias voltage of the amplifying transistor determines the reception sensitivity characteristics of the receiving circuit. In the reception sensitivity obtained at this time, the receiving sensitivity level to be required in the bus type of optical communication LAN using the optical branch coupler cannot be cleared. The dynamic range enough to make up for the optical loss by the optical branch coupler cannot be obtained.

On the other hand, in the case of the alternating current coupling of capacitor coupling or the like, stable receiving sensitivity can be obtained without such a problem as in the above described direct current coupling. The alternating current coupling is normally adopted as the constitution of the optical receiver in the case of the bus type of optical communication.

In a case where a burst type transmission is effected, a signal is transmitted only when the data transmission is necessary to be effected, and a signal is not transmitted when it is unnecessary like a representative token bus system and a CSMA/CD (Carrier Sense Maltiple Access/Collision Detection) system by an access system of a bus type LAN. This case has problems in that the operation is unstable at first when the burst signal has been received by the optical receiver in the above described alternating current coupling, lag time is longer until the reception condition becomes stable, thus resulting in difficult realization of the burst type transmission using the optical receiver of the alternating current coupling type.

Even in the data communication by electric signals, the unstable operation in the early stage of the data reception in the burst type transmission may be caused.

EP-A-0 354 572 discloses a local area network system for transmitting and receiving data among a plurality of nodes provided in respective portions of the network through common buses, and providing a preamble of a given code pattern on the head portion of the data packet to be transmitted from each of the nodes. A similar system for motorcars is disclosed in EP-A-0 327 456.

Accordingly, the present invention has been developed with a view to substantially eliminating the above discussed drawbacks inherent in the prior art and has for this essential object to provide an improved motorcar data communication method.

Another important object of the present invention is to provide an improved motorcar data communication method of making it possible to effect the stable burst type transmission and using a bus type suitable for the data communication for motorcar use. These objects are achieved with the features of claim 1.

These and other objects and features of the present invention will become apparent from the following description taken in conjunction with the preferred embodiment thereof with reference to the accompanying drawings, in which;
Fig. 1 is a view for illustrating the operation in one embodiment of the data communication method of a motorcar of the present invention;
Fig. 2 is a schematic diagram of a communication system to be applied to Fig. 1; and
Fig. 3 is a schematic diagram in the other embodiment of the present invention.

Before the description of the present invention proceeds, it is to be noted that like parts are designated by like reference numerals throughout the accompanying drawings.

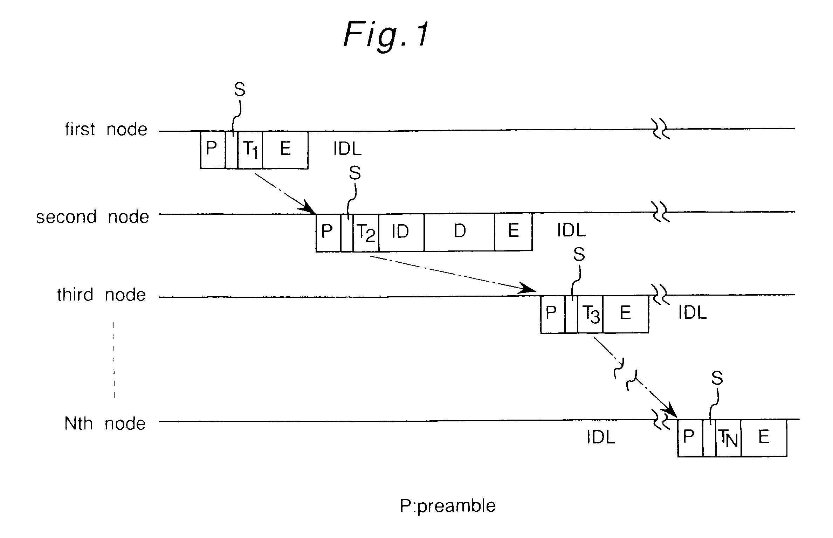

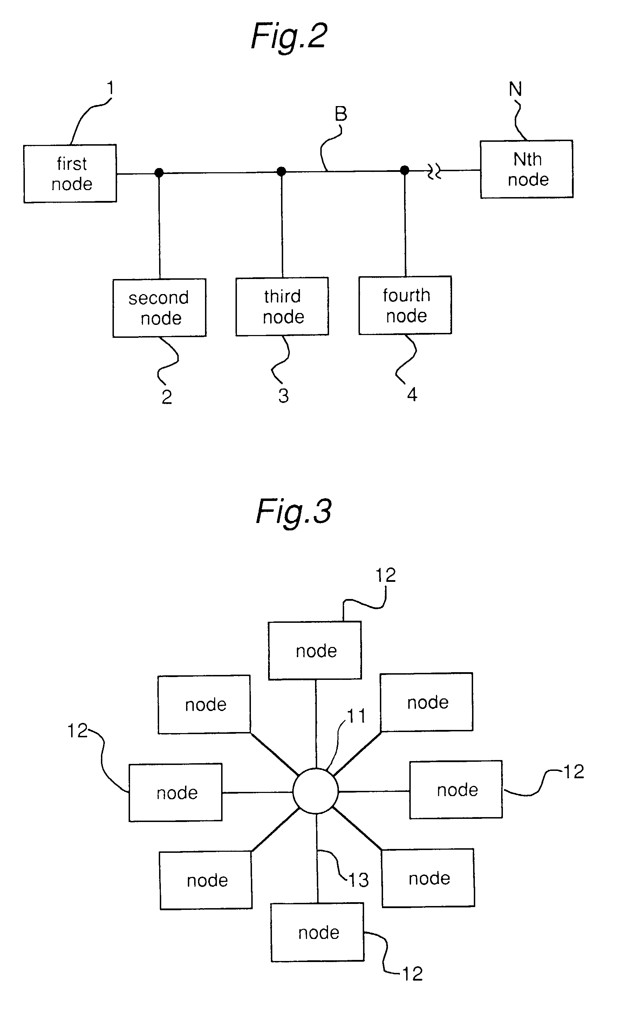

Fig. 1 is an operation illustrating view in one embodiment of a data communication method of a motorcar of the present invention. Fig. 2 is a schematic diagram of a system to be used in Fig. 1.

Fig. 2 is a data communication system of a so-called token bus system. The data communication system is basically the same as the well-known one in construction. The present embodiment makes for the purpose of an application, to the motorcar with light being provided as a communication medium. In Fig. 2, reference numerals 1, 2, 3, 4, ..., N are first, second, third, forth, ..., Nth nodes each being provided on the respective portions of the motorcar, and provided with an optical receiver of the alternating coupling type. Reference character B is a common bus composed of an optical fiber. The data are transferred, received among the respective nodes through the common bus B.

A preamble of a given code pattern is provided in the head portion of a data packet to be transmitted from the respective nodes 1 through N.

Fig. 1 shows a data packet to be transmitted from the respective nodes 1 through N. Reference character P in Fig. 1 is a preamble, reference character S is a start of a message, reference character E is an end of a message, reference character D is a data, reference character ID is a data identification code, reference character IDL is an idle period, reference characters T1, T2, ..., Tn respectively show a transmission permit called a token. Here a token T1 is a node corresponding to each address of a second node 2, a token T2 is of a third node 3, a token T3 is of a fourth mode 4, a token Tn is of a first node 1. A token composed of a code corresponding to the address of the next node is transmitted from the respective node. Only a node which has received a token has a transmission right. In this manner, transmission rights are sequentially given to the respective nodes 1 through N.

Regularly correct given codes, not used in address and so on, such as "101010 ..." and so on are used for the preamble P. The preamble P is set to be made longer than the delay time of the rising of an alternating current coupling type of optical receiver the respective nodes 1 through N have.

In Fig. 1, the data D is included only in the data packet of the second node 2. This fact shows a case where only the second node 2 has a data to be transmitted.

The data D can be received in a stable condition by the provision of the preamble P in the head portion of the data packet to be transmitted from the respective nodes 1 through N. The operation of the optical receiver is made stable while the preamble P is being received when the optical receiver of the alternating current coupling type of a certain node has received a data packet transmitted through the common bus B.

Therefore, the stable burst transmission can be effected when the data communication is effected by the token bus system among the respective nodes 1 through N provided with the optical receiver of the alternating current coupling type.

The present invention can be embodied similarly even in a case where a plurality of nodes 12 are coupled with the use of an optical branch coupler (star coupler) 11, the data are transmitted, received through a common bus 13 composed of an optical fiber as shown in Fig. 3.

The present invention can be, needless to say, applied even to the CSMA / CD system as the CSMA / CD system is occupied in bus only when the transmission data exist with the burst transmission being effected as in the above described token bus system.

The present invention can be applied even in the case of the data communication by the electric signals. The preamble is provided in the head portion of the data packet from the respective nodes for transmitting, receiving the data through the common bus so as to make it possible to receive the actual data in the stable condition.

As is clear from the foregoing description, according to the data communication method of the motorcar of the present invention, the preamble is provided in the head portion of the data packet to be transmitted from the respective nodes. The operation is made stable while the receiver of a certain node is receiving the preamble, the actual data can be received after the condition has been made stable, and the stable burst transmission can be effected. Therefore, the communication method suitable for the bus type of the data communication for the motorcar use can be provided.

## Claims

1. A motorcar data communication method for transmitting and
receiving data among a plurality of nodes (1 to N) provided in the respective portions of the motorcar through common buses (B; 13)
the method comprising
providing a preamble (P) of a given code pattern on the head portion of a data packet to be transmitted from each of the above described nodes, wherein the preamble (P) is provided with a length such that an operation is made stable while a receiver of a certain node receives the preamble, and the actual data are received after the operation of the receiver has become stable so as to make it possible to effect stable burst transmission.

## Patentansprüche

1. Datenübertragungsverfahren für Kraftfahrzeuge zum Senden und Empfangen von Daten zwischen mehreren Knoten (1 bis N), die in entsprechenden Abschnitten des Kraftfahrzeugs vorgesehen sind, über gemeinsame Busse (B; 13),
wobei das Verfahren aufweist:
Vorsehen eines Vorspanns (P) mit einem gegebenen Kodemuster in dem Kopfabschnitt eines von jedem der vorstehend beschriebenen Knoten zu sendenden Datenpaketes,
wobei der Vorspann (P) mit einer solchen Länge versehen wird, daß der Betrieb stabilisiert wird während ein Empfänger eines bestimmten Knotens den Vorspann empfängt, und die tatsächlichen Daten empfangen werden, nachdem sich der Betrieb des Empfängers stabilisiert hat, um es auf diese Weise zu ermöglichen, eine stabile Bündelübertragung durchzuführen.

## Revendications

1. Procédé de transmission de données pour voiture à moteur, permettant d'émettre et de recevoir des données parmi une pluralité de noeuds (1 à N) prévus dans les parties respectives de la voiture à moteur via des bus communs (B ; 13),
le procédé comprenant la fourniture d'un préambule (P) ayant une configuration de code donnée sur la partie en-tête d'un paquet de données devant être émis depuis chacun des noeuds ci-dessus indiqués,
où le préambule (P) est doté d'une longueur telle que le fonctionnement est rendu stable tandis qu'un récepteur d'un certain noeud reçoit le préambule, et les données réelles sont reçues après que le fonctionnement du récepteur est devenu stable de façon à rendre possible une émission de salves stable.
